(19) **Europäisches Patentamt / European Patent Office / Office européen des brevets**

(11) **EP 2 459 965 B1**

(12) **FASCICULE DE BREVET EUROPEEN**

(45) Date de publication et mention de la délivrance du brevet:
**15.05.2013 Bulletin 2013/20**

(21) Numéro de dépôt: **10730181.4**

(22) Date de dépôt: **09.07.2010**

(51) Int Cl.:
*G01C 21/16* [(2006.01)]  *G01S 19/20* [(2010.01)]
*G01S 19/47* [(2010.01)]

(86) Numéro de dépôt international:
**PCT/EP2010/059854**

(87) Numéro de publication internationale:
**WO 2011/003994 (13.01.2011 Gazette 2011/02)**

(54) **PROCEDE DE DETERMINATION DE PARAMETRES DE NAVIGATION D'UN PORTEUR ET DISPOSITIF D'HYBRIDATION ASSOCIE A BANC DE FILTRES DE KALMAN**

VERFAHREN ZUR DEFINITION VON NAVIGATIONSPARAMETERN FÜR EINEN TRÄGER UND MIT EINER KALMAN-FILTERBANK ASSOZIIERTE HYBRIDISIERUNGSVORRICHTUNG

METHOD OF DETERMINING NAVIGATION PARAMETERS FOR A CARRIER AND HYBRIDIZATION DEVICE ASSOCIATED WITH KALMAN FILTER BANK

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **10.07.2009 FR 0954849**

(43) Date de publication de la demande:
**06.06.2012 Bulletin 2012/23**

(73) Titulaire: **SAGEM Défense Sécurité**
**75015 Paris (FR)**

(72) Inventeurs:
• **RIEDINGER, Didier**
  **F-75015 Paris (FR)**
• **VOURC'H, Sébastien**
  **F-75015 Paris (FR)**

• **HOBLOS, Ghaleb**
  **F-76120 Le Grand Quevilly (FR)**

(74) Mandataire: **Regimbeau**
**20, rue de Chazelles**
**75847 Paris Cedex 17 (FR)**

(56) Documents cités:
**WO-A1-2008/040658**

• **CALL C ET AL: "Performance of Honeywell's Inertial/GPS Hybrid (HIGH) for RNP Operations" POSITION, LOCATION, AND NAVIGATION SYMPOSIUM, 2006 IEEE/ION CORONADO, CA APRIL 25-27, 2006, PISCATAWAY, NJ, USA,IEEE, 25 avril 2006 (2006-04-25), page 244, XP010924866 ISBN: 978-0-7803-9454-4**

**Description**

DOMAINE TECHNIQUE GENERAL

Le domaine de l'invention est celui des porteurs utilisant des informations fournies à la fois par une centrale inertielle et par un système de navigation par satellite, comme par exemple un système GPS.

L'invention concerne un procédé et un dispositif d'hybridation, et porte plus particulièrement sur la détection de pannes satellites et la correction de l'impact de telles pannes.

ETAT DE L'ART

Les porteurs comme les aéronefs ou encore les bateaux disposent de nombreux systèmes de navigation. Parmi ces systèmes, on compte notamment un équipement hybride INS/GNSS (de l'anglo-saxon « Inertial Navigation System » et « Global Navigation Satellite System »).

Une centrale inertielle fournit des informations peu bruitées et précises à court terme. Cependant, sur le long terme, les performances en localisation d'une centrale inertielle se dégradent (plus ou moins vite en fonction de la qualité des capteurs, accéléromètres ou gyroscopes par exemple, et des traitements utilisés par la centrale). Si les informations acquises auprès d'un système de navigation par satellites sont quant à elles très peu susceptibles de dériver sur le long terme, elles sont cependant souvent bruitées et d'une précision variable. Par ailleurs, les mesures inertielles sont toujours disponibles alors que les informations GNSS ne le sont pas ou sont susceptibles d'être leurrées et brouillées.

L'hybridation consiste à combiner les informations fournies par la centrale inertielle et les mesures fournies par le système de navigation par satellites pour obtenir des informations de position et de vitesse en tirant avantage des deux systèmes. Ainsi, la précision des mesures fournies par le récepteur GNSS permet de maîtriser la dérive inertielle et les mesures inertielles peu bruitées permettent de filtrer le bruit sur les mesures du récepteur GNSS.

Les systèmes de navigation modernes déterminent un volume de protection autour de la position calculée, qui permet de contenir l'erreur de position vraie à un risque d'intégrité donné, c'est ce qui définit l'intégrité d'un système.

Pour un aéronef, ce volume de protection se présente sous-la forme d'un cylindre vertical par rapport à la surface de la Terre. Ce cylindre est défini par son rayon et sa hauteur, respectivement appelés limite de protection horizontale (HPL) et limite de protection verticale (VPL).

Selon l'état de l'art, ces HPL et VPL sont par exemple déterminés au moyen d'un banc de filtres de Kalman qui permet de se protéger contre la panne éventuelle d'un satellite.

Ces filtres réalisent l'hybridation entre les informations issues du système de navigation par satellite et celles issues de la centrale inertielle. Un des filtres du banc de filtres, désigné par le terme de filtre principal, utilise toutes les mesures GNSS constituées de pseudo-mesures et d'informations sur la qualité de celles-ci. Les autres filtres, dit secondaires, du banc de filtres ne font usage que d'une partie seulement des mesures GNSS disponibles. Si une panne survient au niveau d'une mesure satellite, celle-ci ne sera pas vue par le filtre secondaire ne recevant pas cette mesure : ce filtre secondaire restera donc non pollué.

Chaque filtre élabore une solution de navigation hybride ainsi que des rayons de protection (horizontal et vertical) associés à cette solution et calculés par exemple à partir de la covariance associée à l'erreur de position estimée par le filtre. Les limites de protection HPL et VPL autour de la position vraie sont ensuite déterminées à partir des limites de protections associées aux solutions délivrées par chaque filtre de la banque.

L'utilisation d'un tel banc de filtres de Kalman a été proposée dans le document US 7,219,013. Selon ce document, les rayons de protection sont calculés à l'aide de la méthode de solution de séparation tandis que la détection et l'exclusion d'une panne satellite mettent en oeuvre une surveillance des résidus d'innovation des filtres de Kalman.

Toutefois, cette architecture ne permet pas d'isoler des pannes induites par des faibles dérives, de sorte qu'il s'y avère nécessaire de compléter la surveillance des résidus d'innovation par une méthode dite des moindres carrés utilisant uniquement des informations GNSS.

La demanderesse a développé des dispositifs utilisant un tel banc de filtre, dont un exemple est présenté dans sa demande de brevet n° FR 0858726 déposée le 17 décembre 2008.

L'architecture proposée dans cette demande présente un banc de filtres de Kalman, où chaque filtre est associé à un module de correction des mesures GNSS en entrée du filtre en fonction de sa sortie. La solution de navigation hybride est déterminée par une correction de l'état inertiel en fonction des sorties des filtres du banc de filtres.

Toutefois, l'architecture proposée dans ce document ne s'avère pas totalement satisfaisante. Si elle permet la détection d'une panne et l'exclusion des mesures en provenance du satellite en panne identifié, elle ne propose aucune solution pour évaluer l'impact de la panne sur la solution de navigation. En effet, la détection est basée sur un test statistique instantané qui ne se déclenche que lorsque la panne atteint un seuil de détection. Ainsi, même si le satellite en panne a été isolé, la solution de navigation ne peut être corrigée et une erreur résiduelle persiste provenant des données corrompues par la panne avant identification de celle-ci. De ce fait, en cas de panne, les distances entre la solution délivrée par le filtre principal et celles délivrées par les filtres secondaires augmentent significativement, entrainant un rayon de protection global plus élevé, même si la panne est détecté.

Dans la demande de brevet EP 1 914 561, la Demanderesse décrit un procédé pour déterminer un volume de protection fiable en cas de panne satellite.

Le procédé proposé se base sur une sélection d'un sous-groupe de satellites dans la constellation, et la prise en compte d'hypothèses de panne pour le calcul des rayons de protection par chaque filtre du banc de filtres. Le risque d'intégrité est ainsi réparti entre plusieurs hypothèses, pour envisager la panne d'un satellite.

Si le volume de protection déterminé est fiable, il n'en reste pas moins affecté par une panne satellite, auquel cas il augmente significativement. Les performances de ce procédé restent donc perfectibles.

En outre, les inventions proposées dans ces demandes ne permettent pas de distinguer la nature d'une panne, en particulier biais ou rampe, mais uniquement de déclarer la présence d'une de ces pannes.

De plus, aucun délai de détection n'est contraint, et rien n'indique que la solution hybride à un instant donné n'est pas corrompue par une panne qui sera prochainement détectée.

D'autres documents tels que WO 2008/040658 ou encore XP1092 48 66, CALLC et al, "Performance of Honeywell's Inertial/GPS Hybrid (HiGH) for RNP Operations", Location and Navigation Symposium, Coronado, CA, April 25-27, 2006, décrivent des achitectures hybrides INS/GNSS a bancs de filtres avec une précision améliorée des solutions de position hybrides.

PRESENTATION DE L'INVENTION

L'invention propose de pallier au moins un de ces inconvénients, et vise en particulier à réduire le rayon de protection en cas de panne satellite.

A cet effet, l'invention propose selon un premier aspect un procédé selon la revendication 1, détermination de paramètres de navigation d'un porteur par un dispositif d'hybridation comprenant un banc de filtres de Kalman élaborant chacun une solution de navigation hybride à partir de mesures inertielles calculées par une plateforme virtuelle et de mesures brutes de signaux émis par une constellations de satellites délivrés par un système de positionnement par satellites (GNSS), comprenant les étapes de :

- détermination, pour chaque satellite, d'au moins un rapport de vraisemblance entre une hypothèse de panne d'une nature donnée du satellite et une hypothèse d'absence de panne du satellite,
- déclaration, d'une panne de nature donnée sur un satellite en fonction du rapport de vraisemblance associé à cette panne et d'une valeur seuil,
- estimation de l'impact de la panne déclarée sur chaque solution de navigation hybride, et
- correction des solutions de navigation hybrides en fonction de l'estimation de l'impact de la panne déclarée.

Le procédé selon le premier aspect de l'invention est avantageusement complété par les caractéristiques suivantes, prises seules ou en une quelconque de leurs combinaisons techniquement possibles :

- pour chaque satellite, au moins un rapport de vraisemblance est déterminé à chaque incrémentation du filtre de Kalman sur une fenêtre glissante de stockage, une panne de nature donnée étant déclarée si la somme des rapports de vraisemblance associés à cette panne sur la fenêtre glissante de stockage est supérieure à la valeur seuil associée,
- le procédé comprend en outre, si une panne est déclarée, une étape d'exclusion des mesures brutes de signaux émis par le satellite déclaré en panne,
- le procédé comprend en outre une étape de test de confirmation de panne comprenant la mise en oeuvre d'un test statistique sur des innovations pendant une durée déterminée suite à une déclaration de panne, chaque innovation reflétant l'écart entre une observation correspondant à une mesure brute issue d'un satellite non déclaré en panne et une estimation a posteriori de ladite observation élaborée par un filtre de Kalman utilisant des mesures brutes issues de tous les satellites de la constellation, la déclaration du satellite en panne étant annulée si le test statistique est négatif,
- le procédé comprend en outre une étape de calcul, pour chaque satellite, d'une innovation croisée et d'une covariance d'innovation croisée reflétant l'écart entre une observation correspondant à une mesure brute issue du satellite et une estimation a posteriori de ladite observation élaborée par un filtre de Kalman n'utilisant pas la mesure brute issue du satellite, le rapport de vraisemblance étant déterminé en fonction de l'innovation croisée et de la covariance d'innovation croisée fournies par ledit filtre de Kalman n'utilisant pas la mesure brute issue du satellite et à partir d'une estimation de l'impact de la panne de nature donnée sur ladite innovation croisée,
- l'impact de la panne de nature donnée sur ladite innovation croisée est estimé par détermination, à partir de données fournies par ledit filtre de Kalman n'utilisant pas la mesure brute issue du satellite, d'une matrice dynamique d'innovation, et estimation d'une amplitude de la panne de nature donnée sur une fenêtre glissante d'estimation correspondant à un nombre donné d'incrémentations dudit filtre de Kalman n'utilisant pas la mesure brute issue du satellite, la matrice dynamique d'innovation représentant un lien entre l'amplitude de la panne et l'écart induit par la panne sur l'innovation croisée,

- le nombre donné d'incrémentations dudit filtre de Kalman correspond à une durée inférieure à un délai de détection prédéterminé,
- l'estimation de l'amplitude de la panne de nature donnée est effectuée sur la fenêtre glissante d'estimation par une méthode de minimisation aux moindres carrés ou bien par un filtre de Kalman,
- l'estimation de l'impact de la panne sur chaque solution de navigation hybride comprend une détermination, pour chaque solution de navigation hybride, à partir de données fournies par le filtre de Kalman élaborant la solution de navigation hybride, d'une matrice dynamique de navigation, et une estimation d'une amplitude et d'une covariance de la panne de nature donnée sur une fenêtre glissante d'estimation correspondant à un nombre donné d'incrémentations dudit filtre de Kalman élaborant la solution de navigation hybride, la matrice dynamique de navigation représentant un lien entre l'amplitude de la panne et l'écart induit par la panne sur ladite solution de navigation hybride,
- deux rapports de vraisemblance sont déterminés pour chaque satellite, un rapport étant associé à une hypothèse de panne de nature biais et l'autre rapport étant associé à une hypothèse de panne de nature rampe.
- si une panne de nature biais est déclarée au cours de l'étape de déclaration, l'étape d'estimation de l'impact de la panne sur chaque solution de navigation hybride est réalisée sur une fenêtre glissante d'estimation à partir de l'instant de déclaration de la panne de nature biais,
- si une panne de nature rampe est déclarée, l'étape d'estimation de l'impact de la panne sur chaque solution de navigation hybride est réalisée sur la fenêtre glissante d'estimation précédent l'instant de déclaration de la panne de nature rampe, et
- si plusieurs sommes de rapports de vraisemblance sont supérieures à leur valeur seuil associée, une seule panne est déclarée au cours de l'étape de déclaration, ladite panne correspondant à la plus grande des sommes de rapports de vraisemblance.

L'invention propose selon un deuxième aspect un dispositif, selon la revendication 14, d'hybridation comprenant une plateforme virtuelle apte à calculer des mesures inertielles, un banc de filtres de Kalman chacun destiné à élaborer une solution de navigation hybride à partir des mesures inertielles et de mesures brutes de signaux émis par une constellations de satellites délivrés par un système de positionnement par satellites (GNSS), le dispositif comprenant en outre :

- un module de détection configuré pour déterminer, pour chaque satellite, au moins un rapport de vraisemblance entre une hypothèse de panne d'une nature donnée par rapport et une hypothèse d'absence de panne du satellite et pour déclarer une panne de nature donnée en fonction du rapport de vraisemblance associé à la panne de nature donnée et d'une valeur seuil,
- un module d'accommodation configuré pour estimer l'impact de la panne déclarée sur chaque solution de navigation hybride élaborée par un filtre de Kalman, et à corriger les solutions de navigation hybride en fonction de l'estimation de l'impact de la panne déclarée.

L'invention présente de nombreux avantages.

L'invention permet en particulier d'estimer les impacts d'une panne sur les solutions de navigation hybride et de les corriger. La position fournie est donc plus précise.

L'invention permet de détecter les dérives lentes par des tests statistiques sur une fenêtre glissante.

L'invention permet en outre de différentier une détection de panne de nature biais et de panne de nature rampe, et d'appliquer une correction en conséquence.

De plus, l'invention favorise la détection de pannes dans un délai inférieur à un délai de détection prédéterminé.

Un satellite étant non utilisé par chacun des filtres secondaires, en présence d'une panne satellite l'un des filtres secondaires n'est pas contaminé et permet de conserver une solution de navigation non corrompue.

La solution de navigation hybride délivrée par chaque filtre du banc est corrigée. Par conséquent, le rayon de protection global est réduit.

PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :

- la figure 1 est un schéma illustrant un mode de réalisation possible d'un dispositif selon le second aspect de l'invention,

- les figures 2a et 2b illustrent de façon schématique l'augmentation du rayon de protection en cas de panne satellite, respectivement dans le cadre d'un dispositif d'hybridation de l'art antérieur et d'un dispositif d'hybridation selon le second aspect de l'invention

DESCRIPTION DETAILLEE

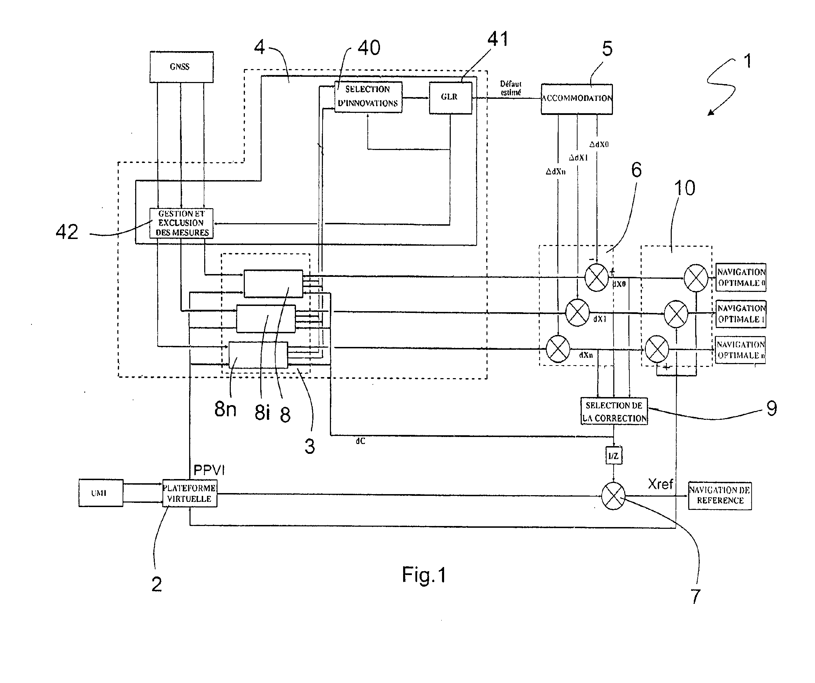

En référence à la figure 1, on a représenté un dispositif d'hybridation 1 conforme à un mode de réalisation possible du second aspect de l'invention, destiné à être embarqué au sein d'un porteur tel qu'un aéronef. Le dispositif d'hybridation 1 utilise des informations fournies par une centrale inertielle UMI et par un système de navigation par satellites GNSS, et comprend une plateforme virtuelle 2 et un banc 3 de filtres de Kalman.

La plateforme virtuelle 2 reçoit des incréments inertiels provenant des capteurs (gyroscopes, accéléromètres) de la centrale inertielle. Les incréments inertiels correspondent notamment à des incréments angulaires et à des incréments de vitesse. Des informations de navigation inertielle (comme les attitudes, la vitesse ou la position du porteur) sont calculées par la plateforme virtuelle 2 à partir de ces incréments. Ces informations de navigation inertielle sont désignées mesures inertielles PPVI par la suite.

Ces mesures inertielles PPVI sont transmises à un dispositif de calcul des pseudo-distances estimées a priori (non représenté sur la figure 1) qui reçoit également des données sur la position des satellites. A partir d'une part des mesures inertielles et d'autres par des données sur la position des satellites, le dispositif de calcul des pseudo-distances estimées a priori calcule les pseudo-distances a priori entre le porteur et les différents satellites visibles du porteur.

Le dispositif d'hybridation 1 reçoit également du système de navigation par satellite GNSS les pseudo-mesures entre le porteur et les différents satellites visibles. On calcule alors classiquement les écarts (appelées observations) entre les pseudo-mesures estimées a priori et les pseudo-mesures délivrées par le système GNSS.

Le dispositif d'hybridation 1 comporte en outre un banc de filtres de Kalman 3 réalisant l'hybridation entre les informations inertielles provenant de la centrale inertielle et les informations du système de navigation par satellite. Outre une fonction de fourniture d'informations statistiques sur les mesures en sortie, le rôle des filtres est de maintenir la plateforme virtuelle 2 dans un domaine de fonctionnement linéaire image de celui modélisé dans le filtre de Kalman en estimant chacun un vecteur d'états dX0-dXn .

De manière classiquement connue en soi, le banc de filtres 3 comporte plusieurs filtres de Kalman en parallèle. Un des filtres est appelé filtre de Kalman principal 8 : il prend en compte toutes les observations (et reçoit pour ce faire toutes les mesures issues du système GNSS) et élabore une solution de navigation hybride principale.

Les autres filtres 8i, 8n sont appelés filtres secondaires : ils ne prennent en compte qu'une partie des observations, par exemple (n-1) observations parmi les n observations relatives aux n satellites visibles de sorte que le i-ème filtre de Kalman secondaire 9i reçoit du système GNSS les mesures de tous les satellites sauf du i-ème, et élaborent chacun une solution de navigation hybride secondaire.

On relèvera que le processus d'élaboration des observations décrit ci-dessus n'est pas commun à tous les filtres du banc de filtres 3, mais est réalisé pour chacun des filtres. Ainsi, le calcul des pseudo-distances a priori et le calcul des observations qui sont évoqués ci-dessus ne sont pas communs à tous les filtres, mais le dispositif d'hybridation 1 conforme à l'invention réalise ces calculs pour chaque filtre du banc de filtres 3.

Dans le cadre de l'architecture en boucle fermée représentée sur la figure 1, le dispositif d'hybridation 1 élabore une sortie hybride Xref (« Navigation de référence ») correspondant aux mesures inertielles PPVI calculées par la plateforme virtuelle 2 et corrigées, via un soustracteur 7, par un vecteur de stabilisation dC présentant autant de composantes que les vecteurs d'état estimés par les filtres de Kalman.

L'invention n'est toutefois pas limitée à une telle architecture, mais s'étend à une architecture en boucle ouverte dans laquelle le soustracteur 7 n'est pas activé.

Afin d'élaborer les solutions de navigation hybride, le dispositif 1 comporte un banc de sommateurs 10, où chaque sommateur est positionné en sortie d'un filtre de la banque pour ajouter aux vecteurs d'état dX0-dXn élaborés par les filtres la sortie hybride Xref.

On relèvera que la sortie hybride Xref sert uniquement en interne. Ce sont ainsi les informations délivrées en sortie du sommateur 10 qui fournissent la solution de navigation optimale.

La sortie hybride Xref peut être rebouclée à l'entrée de la plateforme virtuelle 2.

Par ailleurs, comme cela est représenté sur la figure 1, un vecteur de stabilisation dC peut être appliqué à l'entrée de l'ensemble de chacun des filtres du banc 3. De cette manière, chaque filtre s'ajuste en soustrayant à son estimation la correction dC, et est ainsi maintenu cohérent de la plateforme virtuelle 2.

Le dispositif d'hybridation comporte en outre un module 9 d'élaboration du vecteur de stabilisation dC dont deux modes de réalisation sont indiqués ci-après à titre d'exemples non limitatifs.

Selon un premier mode de réalisation possible, les corrections à appliquer aux mesures inertielles sont issues d'un seul filtre. Ainsi, le vecteur de stabilisation dC est égal, dans toutes ses composantes, au vecteur d'états estimé par le filtre de Kalman sélectionné. La sélection s'opère par exemple au sein du module 4 conformément au document EP1801539 A par détection d'une éventuelle panne satellite.

Selon un second mode de réalisation possible, le vecteur de stabilisation dC est élaboré composante par composante, en utilisant pour chaque composante l'ensemble des filtres de Kalman. Le module 9 d'élaboration de la correction dC est alors configuré pour élaborer chacune des composantes dC[état] du vecteur de stabilisation dC en fonction de l'ensemble des composantes correspondantes dX0[état]-dXn[état] des vecteurs de correction dX0-dXn. L'élaboration de chacune des composantes s'opère par exemple conformément à la demande de brevet FR0858721 déposée le 17 Décembre 2008 par la Demanderesse.

Selon une variante de réalisation de l'invention représentée sur la figure 1, on associe à chaque filtre un module de correction des mesures satellites 5 délivrant au filtre les mesures (typiquement les pseudo-mesures) du système de positionnement par satellites GNSS qui sont utilisées par le filtre après correction à l'aide de la solution de navigation hybride élaborée par le filtre. Ce module de correction 5 fait l'objet de la demande de brevet FR 0858726 déposée le 17 Décembre 2008 par la Demanderesse.

Dans ce qui suit, on définit un satellite en panne comme étant un satellite qui envoie des informations erronées dans son message, conduisant à un écart (fixe ou variable) entre sa position réelle et la position donnée dans son message.

Le dispositif d'hybridation 1 selon l'invention comporte un module 4 de détection et d'exclusion de pannes satellites comprenant un module 41 de détection configuré de manière à mettre en oeuvre les étapes de :

- détermination, pour chaque satellite, d'au moins un rapport Ir, Ir' de vraisemblance entre une hypothèse de panne d'une nature donnée du satellite et une hypothèse d'absence de panne du satellite,
- déclaration, d'une panne de nature donnée sur un satellite en fonction du rapport Ir, Ir' de vraisemblance associé à cette panne et d'une valeur seuil.

Avantageusement, pour chaque satellite, au moins un rapport Ir, Ir' de vraisemblance est déterminé à chaque incrémentation du filtre de Kalman sur une fenêtre glissante de stockage, et une panne de nature donnée est déclarée si la somme des rapports de vraisemblance Ir, Ir' associés à cette panne sur la fenêtre glissante de stockage est supérieure à la valeur seuil associée.

Un rapport de vraisemblance est représentatif de la probabilité que la panne de nature donnée qui lui est associée affecte le satellite correspondant. Par exemple, si un rapport de vraisemblance associé à une panne de nature donnée est positif, il est plus probable que ladite panne affecte le satellite correspondant. Plus un rapport de vraisemblance est élevé, plus la probabilité est grande que son satellite correspondant soit corrompu par la panne qui lui est associé.

La valeur seuil peut être la même pour plusieurs satellites et/ou pour plusieurs natures de panne, ou bien les valeurs seuils peuvent être différentes pour chaque satellite et pour chaque nature de panne, auquel cas chaque rapport de vraisemblance, ou avantageusement chaque somme de rapports de vraisemblance, est comparé à une valeur seuil qui lui est propre.

La taille de la fenêtre glissante de stockage peut varier en fonction de la nature de la panne, ou bien une seule taille de fenêtre glissante peut être prévue.

Comme cela sera détaillé par la suite, le module 4 de détection et d'exclusion de pannes satellites met également en oeuvre une fonction de gestion et d'exclusion des mesures GNSS pour les surveiller.

Dans le mode de réalisation représenté sur la figure 1, le module 4 de détection et d'exclusion comprend ainsi un module 42 de gestion des signaux satellites qui reçoit les mesures GNSS et route ces informations vers les différents filtres du banc 3 en fonction des circonstances (aucun satellite détecté comme étant défaillant ; exclusion d'un satellite détecté comme étant défaillant).

Le dispositif d'hybridation selon le deuxième aspect de l'invention comprend encore un module 5 d'accommodation configuré pour mettre en oeuvre les étapes de :

- estimation de l'impact d'une panne sur la solution de navigation hybride élaborée par chaque filtre de Kalman, et
- si une panne est déclarée, correction des solutions de navigation hybride en fonction de l'estimation de l'impact de la panne.

Le module 5 d'accommodation a ainsi pour fonction d'évaluer les écarts $\Delta X, \Delta X_i, ..., \Delta X_n$ induits par une panne sur les solutions de navigation hybride élaborées par les filtres de Kalman 8, 8i...8n et de corriger les solutions de navigation hybride, par exemple à l'aide d'un banc de soustracteurs 6. L'invention n'est cependant pas limitée à cette architecture et l'estimation de l'impact de la panne sur les solution de navigation hybride peut être réalisée de manière alternative par les filtres de Kalman, par le module 41 de détection, ou encore par tout autre moyen adapté connu de l'homme de l'art.

On va maintenant décrire des méthodes de calcul développées par la Demanderesse pour déterminer les rapports de vraisemblance et l'impact d'une panne sur la solution de navigation hybride. Ces formules sont données à titre illustratif et ne constituent en rien une limitation de l'invention.

Avantageusement, les rapports de vraisemblance sont déterminés en fonction de données fournies par les filtres de Kalman comprenant en particulier des innovations et des covariances d'innovation, et à partir d'une estimation de l'impact de la panne de nature donnée sur les innovations.

On entend par innovation un écart entre une observation a priori par un filtre de Kalman et une estimation a posteriori de cette observation élaborée par le filtre.

Chaque filtre délivre donc n innovations, autant que de satellites dans la constellation.

On appelle en particulier « innovation croisée » l'innovation fournie par chaque filtre de Kalman secondaire 8i représentant l'écart entre une observation a priori en provenance du satellite dont le filtre secondaire 8i ne reçoit pas les données et une estimation a posteriori de cette observation. Le banc de filtre de Kalman délivre ainsi n*(n+1) innovations, dont n sont des innovations croisées.

Avantageusement, le module 4 de détection et d'exclusion de pannes satellites comprend un module 40 de sélection d'innovations configuré de manière à sélectionner les innovations (croisées ou non) et les covariances d'innovation et les router vers le module 41.

Avantageusement, le module 40 est configuré pour transmettre les innovations croisées, ou les innovations classiques, au module 41 pour le calcul des rapports de vraisemblance. L'avantage d'utiliser une innovation croisée, par rapport aux tests d'innovation classiques est que le filtre qui permet de tester un satellite en panne n'est pas perturbé par la panne.

En particulier, le i-ème filtre de Kalman secondaire 9i reçoit du système GNSS les mesures de tous les satellites sauf du i-ème, et élabore ainsi le vecteur d'états dXi de manière indépendante du satellite i, de sorte que ce filtre 8i n'est pas perturbé par une éventuelle panne affectant le satellite i.

L'innovation croisée d'un satellite correspond par exemple à l'écart entre la pseudo-distance audit satellite délivrée par le système de positionnement par satellites et une estimation a posteriori de cette pseudo-distance fournie par un filtre de Kalman n'utilisant pas la pseudo-distance délivrée par le satellite, de sorte que cette estimation est indépendant du satellite. Le calcul du rapport de vraisemblance ne sera donc pas perturbé par une panne, et notamment par une panne lente, du satellite.

On précise ici que l'innovation croisée peut d'une manière générale être appliquée à n'importe quelle mesure brute, par exemple à une mesure de pseudo-vitesse (également appelée mesure doppler).

Préférentiellement, le rapport de vraisemblance Ir associé à une panne de nature donnée est déterminé, à un instant t donné, pour chaque satellite, par la formule suivante :

$$ lr_t = \varepsilon_t^{\,T} S_t^{\,-1} \varepsilon_t - (\varepsilon_t - \rho_t)^T S_t^{\,-1} (\varepsilon_t - \rho_t) $$

dans laquelle :

- $\varepsilon$, représente une innovation (classique ou avantageusement croisée) d'un filtre de Kalman 8i à l'instant t
- S, représente la covariance de l'innovation à l'instant t, et
- $\rho_t$ représente l'écart dû à la panne sur ladite innovation à l'instant t.
- $^T$ représente la transposition d'une matrice ou d'un vecteur colonne. $\rho_t$ est inconnu, mais on peut l'estimer sur une fenêtre glissante d'estimation. Préférentiellement, on estime en parallèle l'écart dû à la panne sur la solution hybride de navigation élaborée par ledit filtre de Kalman, écart que l'on notera $\beta$, dans la suite. Ces estimations peuvent être mises en oeuvre selon les formules suivantes :

$$ \rho_t = \varphi_t^{\,T} \hat{\upsilon}_t $$

$$ \beta_t = \mu_t^{\,T} \hat{\upsilon}_t $$

dans lesquelles :

- $\hat{\upsilon}$, est une estimation de l'amplitude de la panne,
- $\varphi_t$ est une matrice dynamique d'innovation, représentant un lien entre l'amplitude de la panne et l'écart induit par la panne sur l'innovation, et

- $\mu_t$ est une matrice dynamique de navigation, représentant un lien entre l'amplitude de la panne et l'écart induit par la panne sur la solution hybride de navigation.

Les deux matrice dynamiques à l'instant t sont avantageusement calculées par le module 41 de détection à partir de données fournies par ledit filtre de Kalman, préférentiellement de manière récursive croisée, c'est-à-dire que, pour tout instant t, $\varphi_t$ et $\mu_t$, sont calculées en fonction de $\varphi_{t-1}$ et $\mu_{t-1}$.

Lesdites données fournies par le filtre de Kalman peuvent comprendre un gain de Kalman, et des matrices de transition et d'observation.

L'estimation de l'amplitude de la panne est avantageusement effectuée sur une fenêtre glissante d'estimation correspondant à un nombre donné N d'incrémentations du filtre de Kalman.

Selon une variante avantageuse, l'estimation peut être réalisée par une estimation aux moindres carrés sur la fenêtre glissante d'estimation, préférentiellement par la formule suivante :

$$\hat{\upsilon}_t = (\sum\nolimits_{i=t-N+1}^{t} \varphi_i S_i^{-1} \varphi_i^{T})^{-1}.(\sum\nolimits_{i=t-N+1}^{t} \varphi_i S_i^{-1} \varepsilon_i)$$

Avantageusement, le nombre donné N d'incrémentations du filtre de Kalman correspond à une durée inférieure à un délai de détection T prédéterminé. En particulier, en notant $\delta$ la période d'incrémentation du filtre de Kalman, la fenêtre glissante d'estimation doit vérifier : $N.\delta \leq T$.

Cette fenêtre glissante d'estimation est avantageusement la même que la fenêtre de stockage des rapports de vraisemblance associée à la panne.

Ce délai de détection permet de contraindre la taille de la fenêtre glissante d'estimation et ainsi de limiter la charge de calcul.

Si un satellite est déclaré en panne, l'estimation des écarts évalués par le module 5 à l'instant t sur la solution de navigation hybride élaborée par chaque filtre de Kalman 8i est :

$$\Delta X_i = \beta_t = \mu_t^{T} \hat{\upsilon}_t$$

où $\beta_t$ a été calculé à partir de l'innovation utilisant une observation a priori du satellite déclaré en panne. Le module 40 de sélection d'innovations est avantageusement configuré de telle sorte que, dans ce cas, seules ces innovations sont fournies au module 41 de détection et au module 5 d'accommodation. Ainsi, la sélection d'innovation permet d'estimer l'impact d'une panne détectée à partir des innovations utilisant des informations fournies par le satellite déclaré en panne.

Par ailleurs, l'écart sur la covariance $P_i$ de l'erreur associée à la solution de navigation hybride élaborée par le filtre de Kalman 8i est également estimé par la formule suivante :

$$\Delta P_i = \mu_t^{T} \hat{P}_t \mu_t$$

où $\hat{P}_t$ est la covariance du défaut estimé à l'instant t $\hat{\upsilon}_t$.

Préférentiellement, le module 41 de détection est apte à stocker les rapports de vraisemblance de chaque satellite et pour chaque panne de nature donnée sur la fenêtre glissante de stockage.

Les estimations de l'impact de la panne sur les solutions de navigation hybrides fournies par les filtres sont retirées au niveau du banc de soustracteurs 6. Par addition de la sortie hybride au niveau du banc de sommateurs 10, on obtient, pour chaque filtre 8, 8i, 8n, une solution de navigation optimale du type :

$$X_{ref} + dX_i - \Delta X_i$$

dont la covariance de l'erreur associée est corrigée par $\Delta P_i$.

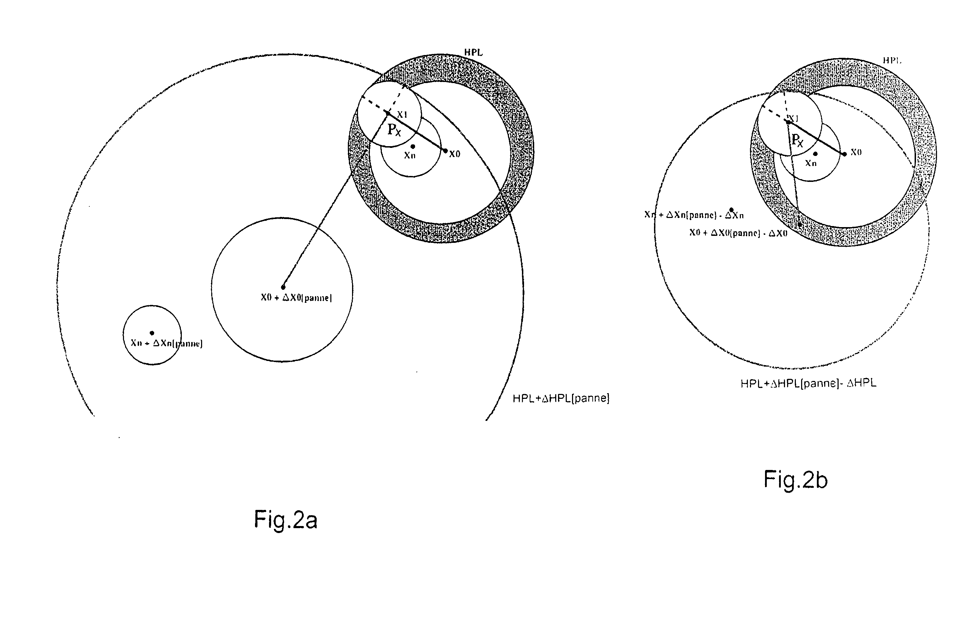

La correction ainsi apportée en sortie de chaque filtre permet de réduire l'écart entre les positions estimées par chacun des filtres de la banque, et ainsi de réduire le rayon de protection global, comme on l'a illustré sur les figures 2a et 2b.

La figure 2a représente l'augmentation de la limite de protection horizontale en cas de panne dans le cadre d'un dispositif d'hybridation de l'art antérieur. Les solutions de navigation optimales sont notées X0, X1, Xn et sont représentées avec leur limite de protection. La limite de protection horizontale, autour de la position X0 estimée par le filtre principal, est noté HPL.

On suppose ici qu'une panne affecte le premier satellite de la constellation. On a adjoint le suffixe [panne] pour identifier les grandeurs affectées par la panne. Le premier filtre secondaire ne prend pas en compte les mesures en provenance du satellite en panne ; la position estimée par ce filtre n'est pas affectée et reste la même. Par contre, les positions estimées par les autres filtres du banc, en particulier la positon X0, est modifiée. La limite de protection horizontale augmente significativement.

Un schéma analogue pourrait illustrer l'augmentation de la limite de protection verticale.

L'invention permet de limiter significativement l'augmentation des limites de protection horizontale et verticale, et donc du volume de protection en cas de panne, en corrigeant les solutions de navigation optimales affectées par la panne. Comme on l'a représenté sur la figure 2b, les distances entre les positions estimées par les différents filtres sont fortement réduites, et donc la limite de protection (HPL ou VPL) l'est également.

Selon une variante avantageuse, deux rapports Ir, Ir' de vraisemblance sont déterminés pour chaque satellite, un rapport Ir étant associé à une hypothèse de panne de nature biais et l'autre rapport Ir' étant associé à une hypothèse de panne de nature rampe.

En particulier, la matrice dynamique d'innovation déterminée pour chaque incrémentation d'un filtre de Kalman est différente pour une panne de nature biais ou rampe. Pour chaque satellite, les deux rapports Ir, Ir' de vraisemblance sont donc différents.

L'invention permet ainsi de différencier l'occurrence d'une panne de nature biais ou bien d'une panne de nature rampe.

Si une panne de nature biais est détectée, l'étape d'estimation de l'impact de la panne sur la solution de navigation hybride est avantageusement réalisée sur une fenêtre glissante d'estimation à partir de l'instant de déclaration de la panne de nature biais. Ainsi, si une panne de type biais est détectée, on laisse active la fenêtre glissante d'estimation pendant un temps déterminé, suffisant pour estimer les caractéristiques de la panne.

Avantageusement, l'estimation des caractéristiques de la panne de type biais est fonction de l'instant d'apparition de la panne, c'est-à-dire de l'instant où la somme des rapports de vraisemblance associée à la panne de type biais a dépassé sa valeur seuil associée. L'exclusion des mesures par le dispositif 42 n'est alors implémentée qu'après cette estimation.

Si une panne de type rampe est détectée, l'estimation de l'impact de la panne sur la solution de navigation hybride est préférentiellement réalisée sur la fenêtre glissante d'estimation précédent l'instant de déclaration de la panne de nature rampe.

On prévoit avantageusement une phase de confirmation d'exclusion durant laquelle l'hypothèse de panne est vérifiée par un test statistique.

Préférentiellement, on teste sur une durée déterminée si les innovations du filtre principal - sauf celle concernant le satellite détecté en panne - suivent une loi du $\chi_2$. Si le test est positif, l'exclusion est validée, sinon elle est ignorée et le satellite n'est pas exclu.

Avantageusement, si plusieurs sommes de rapports Ir, Ir' de vraisemblance sont supérieures à leur valeur seuil associée, une seule panne est déclarée par le module 41 de détection. Cette panne correspond à la plus grande des sommes de rapports de vraisemblance pour l'ensemble des pannes envisagées sur l'ensemble des satellites.

Ainsi, si deux satellites sont susceptibles d'être déclarés en panne, seule la panne la plus probable est effectivement déclarée et si deux pannes de nature différentes sont susceptibles d'être déclarées, seule la panne la plus probable est effectivement déclarée.

## Revendications

1. Procédé de détermination de paramètres de navigation d'un porteur par un dispositif d'hybridation comprenant un banc (3) de filtres de Kalman élaborant chacun une solution de navigation hybride à partir de mesures inertielles calculées par une plateforme virtuelle (2) et de mesures brutes de signaux émis par une constellations de satellites délivrés par un système de positionnement par satellites (GNSS), comprenant les étapes de :

   - détermination, pour chaque satellite, d'au moins un rapport (Ir, Ir') de vraisemblance entre une hypothèse de panne d'une nature donnée du satellite et une hypothèse d'absence de panne du satellite,
   - déclaration, d'une panne de nature donnée sur un satellite en fonction du rapport (Ir, Ir') de vraisemblance associé à cette panne et d'une valeur seuil, **caractérisé en ce qu'**il comprend en autre, les étapes de:
   - estimation de l'impact de la panne déclarée sur chaque solution de navigation hybride, et
   - correction des solutions de navigation hybrides en fonction de l'estimation de l'impact de la panne déclarée.

**2.** Procédé selon la revendication précédente, dans lequel, pour chaque satellite, au moins un rapport (Ir, Ir') de vraisemblance est déterminé à chaque incrémentation du filtre de Kalman sur une fenêtre glissante de stockage, une panne de nature donnée étant déclarée si la somme des rapports de vraisemblance (Ir, Ir') associés à cette panne sur la fenêtre glissante de stockage est supérieure à la valeur seuil associée.

**3.** Procédé selon la revendication précédente, comprenant en outre, si une panne est déclarée, une étape d'exclusion des mesures brutes de signaux émis par le satellite déclaré en panne.

**4.** Procédé selon la revendication précédente, comprenant en outre une étape de test de confirmation de panne comprenant la mise en oeuvre d'un test statistique sur des innovations pendant une durée déterminée suite à une déclaration de panne, chaque innovation reflétant l'écart entre une observation correspondant à une mesure brute issue d'un satellite non déclaré en panne et une estimation a posteriori de ladite observation élaborée par un filtre de Kalman utilisant des mesures brutes issues de tous les satellites de la constellation, la déclaration du satellite en panne étant annulée si le test statistique est négatif.

**5.** Procédé selon l'une des revendications précédentes, comprenant en outre une étape de calcul, pour chaque satellite, d'une innovation croisée et d'une covariance d'innovation croisée reflétant l'écart entre une observation correspondant à une mesure brute issue du satellite et une estimation a posteriori de ladite observation élaborée par un filtre de Kalman n'utilisant pas la mesure brute issue du satellite, le rapport (Ir, Ir') de vraisemblance étant déterminé en fonction de l'innovation croisée et de la covariance d'innovation croisée fournies par ledit filtre de Kalman n'utilisant pas la mesure brute issue du satellite et à partir d'une estimation de l'impact de la panne de nature donnée sur ladite innovation croisée.

**6.** Procédé selon la revendication précédente, dans lequel l'impact de la panne de nature donnée sur ladite innovation croisée est estimé par détermination, à partir de données fournies par ledit filtre de Kalman n'utilisant pas la mesure brute issue du satellite, d'une matrice dynamique d'innovation, et estimation d'une amplitude de la panne de nature donnée sur une fenêtre glissante d'estimation correspondant à un nombre donné (N) d'incrémentations dudit filtre de Kalman n'utilisant pas la mesure brute issue du satellite, la matrice dynamique d'innovation représentant un lien entre l'amplitude de la panne et l'écart induit par la panne sur l'innovation croisée.

**7.** Procédé selon la revendication précédente, dans lequel le nombre donné (N) d'incrémentations dudit filtre de Kalman correspond à une durée inférieure à un délai de détection prédéterminé (T).

**8.** Procédé selon les revendications 5 et 6, dans lequel l'estimation de l'amplitude de la panne de nature donnée est effectuée sur la fenêtre glissante d'estimation par une méthode de minimisation aux moindres carrés ou bien par un filtre de Kalman.

**9.** Procédé selon l'une des revendications précédentes, dans lequel l'estimation de l'impact de la panne sur chaque solution de navigation hybride comprend une détermination, pour chaque solution de navigation hybride, à partir de données fournies par le filtre de Kalman élaborant la solution de navigation hybride, d'une matrice dynamique de navigation, et une estimation d'une amplitude et d'une covariance de la panne de nature donnée sur une fenêtre glissante d'estimation correspondant à un nombre donné d'incrémentations dudit filtre de Kalman élaborant la solution de navigation hybride, la matrice dynamique de navigation représentant un lien entre l'amplitude de la panne et l'écart induit par la panne sur ladite solution de navigation hybride.

**10.** Procédé selon l'une des revendications précédentes, dans lequel deux rapports (Ir, Ir') de vraisemblance sont déterminés pour chaque satellite, un rapport (Ir) étant associé à une hypothèse de panne de nature biais et l'autre rapport (Ir') étant associé à une hypothèse de panne de nature rampe.

**11.** Procédé selon les revendications 8 et 9, dans lequel, si une panne de nature biais est déclarée au cours de l'étape de déclaration, l'étape d'estimation de l'impact de la panne sur chaque solution de navigation hybride est réalisée sur une fenêtre glissante d'estimation à partir de l'instant de déclaration de la panne de nature biais.

**12.** Procédé selon les revendications 8 et 9, dans lequel, si une panne de nature rampe est déclarée, l'étape d'estimation de l'impact de la panne sur chaque solution de navigation hybride est réalisée sur la fenêtre glissante d'estimation précédent l'instant de déclaration de la panne de nature rampe.

**13.** Procédé selon l'une des revendications précédentes, dans lequel, si plusieurs sommes de rapports (Ir, Ir') de vraisemblance sont supérieures à leur valeur seuil associée, une seule panne est déclarée au cours de l'étape de déclaration, ladite panne correspondant à la plus grande des sommes de rapports de vraisemblance.

14. Dispositif d'hybridation comprenant une plateforme virtuelle (2) apte à calculer des mesures inertielles, un banc (3) de filtres de Kalman chacun destiné à élaborer une solution de navigation hybride à partir des mesures inertielles et de mesures brutes de signaux émis par une constellations de satellites délivrés par un système de positionnement par satellites (GNSS), comprenant :

    - un module (41) de détection configuré pour déterminer, pour chaque satellite, au moins un rapport (Ir, Ir') de vraisemblance entre une hypothèse de panne d'une nature donnée par rapport et une hypothèse d'absence de panne du satellite et pour déclarer une panne de nature donnée en fonction du rapport de vraisemblance (Ir, Ir') associé à la panne de nature donnée et d'une valeur seuil, le dispositif etant **caractérisé en ce qu'**il comprend en outre :
    - un module (5) d'accommodation configuré pour estimer l'impact de la panne déclarée sur chaque solution de navigation hybride élaborée par un filtre de Kalman, et à corriger les solutions de navigation hybride en fonction de l'estimation de l'impact de la panne déclarée.

**Patentansprüche**

1. Verfahren zur Bestimmung von Navigationsparametern eines Trägers durch eine Hybridisierungsvorrichtung, die eine Bank (3) von Kalman-Filtern umfasst, weiche jeweils eine Hybrid-Navigations-Lösung ausgehend von Trägheitsmessungen, die durch eine virtuelle Plattform (2) berechnet werden, und von Rohmessungen von Signalen, die von einer Konstellation von Satelliten ausgesendet werden, die durch ein Satelliten-Positionierungssystem (GNSS) bereitgestellt werden, erarbeiten, umfassend die Schritte:

    - Bestimmung, für jeden Satelliten, wenigstens eines Wahrscheinlichkeitsverhältnisses (Ir, Ir') zwischen einer Annahme eines Fehlers einer gegebenen Art des Satelliten und einer Annahme der Abwesenheit eines Fehlers des Satelliten,
    - Angabe eines Fehlers der gegebenen Art auf einem Satelliten in Abhängigkeit von dem Wahrscheiniichkeitsverhäitnis (Ir, Ir') in Bezug auf diesen Fehler und einem Schwellenwert,

    **dadurch gekennzeichnet, dass** es außerdem die Schritte umfasst:

    - Abschätzung der Auswirkung des angezeigten Fehlers auf jede Hybrid-Navigations-Lösung, und
    - Korrektur der Hybrid-Navigations-Lösungen in Abhängigkeit von der Einschätzung der Auswirkung des angezeigten Fehlers,

2. Verfahren gemäß dem vorherigen Anspruch, wobei, für jeden Satelliten, wenigstens ein Wahrscheinlichkeitsverhältnis (Ir, Ir') an jeder Inkrementierung des Kalman-Filters auf einem Speicher-Gleitfenster bestimmt wird, wobei ein Fehler der gegebenen Art angezeigt wird, wenn die Summe der Wahrscheinlichkeitsverhältnisse (Ir, Ir') in Verbindung mit diesem Fehler auf dem Speicher-Gleitfenster über einem damit verbundenen Schwellenwert liegt.

3. Verfahren gemäß dem vorherigen Anspruch, welches ferner, wenn ein Fehler angezeigt wird, einen Schritt des Ausschlusses von Rohmessungen von Signalen, die von dem Satelliten ausgesendet werden, bei dem ein Fehler angezeigt wird, umfasst.

4. Verfahren gemäß dem vorherigen Anspruch, welches ferner einen Testschritt der Bestätigung des Fehlers umfasst, welcher das Durchführen eines statischen Tests an den Neuerungen während eines bestimmten Zeitraums, der auf das Anzeigen des Fehlers folgt, umfasst, wobei jede Neuerung die Diskrepanz zwischen einer Beobachtung, die einer Rohmessung entspricht, die von einem Satelliten stammt, bei dem kein Fehler angezeigt wird, und einer Schätzung im Nachhinein dieser Beobachtung, die durch einen Kalman-Filter unter Verwendung der Rohmessungen, die von sämtlichen Satelliten der Konstellation stammen, erarbeitet wird, widerspiegelt, wobei die Anzeige des Fehlers bei dem Satelliten für ungültig erklärt wird, wenn der statische Test negativ ist.

5. Verfahren gemäß einem der vorherigen Ansprüche, welches ferner einen Schritt der Berechnung, für jeden Satelliten, einer gekreuzten Neuerung und einer Kovarianz der gekreuzten Neuerung, welche eine Diskrepanz zwischen einer Beobachtung, die einer von einem Satelliten stammenden Rohmessung entspricht, und einer Schätzung im Nachhinein dieser Beobachtung, die durch einen Kalman-Filter erarbeitet wurde, der nicht die von dem Satelliten stammende Rohmessung verwendet, widerspiegelt, wobei das Wahrscheinlichkeitsverhältnis (Ir, Ir') in Abhängigkeit von der gekreuzten Neuerung und der Kovarianz der gekreuzten Neuerung, die von dem Kalman-Filter geliefert wird, der nicht die von dem Satelliten stammende Rohmessung verwendet, und ausgehend von einer Schätzung der Auswirkung des Fehlers der gegebenen Art auf die gekreuzte Neuerung bestimmt wird.

6. Verfahren gemäß dem vorherigen Anspruch, wobei die Auswirkung des Fehlers der gegebenen Art auf die gekreuzte Neuerung durch Bestimmung, ausgehend von den Daten, die durch den Kalman-Filter geliefert werden, der nicht die von dem Satelliten stammende Rohmessung verwendet, einer dynamischen Matrix der Neuerung und Schätzung einer Amplitude des Fehlers der gegebenen Art auf einem Schätzungs-Gleitfenster, welches einer gegebenen Anzahl (N) von Inkrementierungen des Kalman-Filters, der nicht die von dem Satelliten stammende Rohmessung verwendet, entspricht, eingeschätzt wird, wobei die dynamische Matrix der Neuerung eine Verbindung zwischen der Fehleramplitude und der Diskrepanz, die durch den Fehler auf die gekreuzte Neuerung induziert wird, darstellt.

7. Verfahren gemäß dem vorherigen Anspruch, wobei die gegebene Anzahl (N) von Inkrementierungen des Kalman-Filters einem Zeitraum entspricht, der kürzer ist als eine Verzögerung der vorbestimmten Erfassung (T).

8. Verfahren gemäß den Ansprüchen 5 und 6, wobei die Schätzung der Amplitude des Fehlers gegebener Art auf dem Schätzungs-Gleitfenster durch ein Verfahren der Minimierung auf kleinste Fehlerquadrate oder auch durch einen Kalman-Filter bewirkt wird.

9. Verfahren gemäß einem der vorherigen Ansprüche, wobei die Schätzung der Auswirkung des Fehlers auf jede Hybrid-Navigations-Lösung eine Bestimmung, für jede Hybrid-Navigations-Lösung, ausgehend von Daten, die durch den Kalman-Filter geliefert werden, der die Hybrid-Navigations-Lösung erarbeitet, einer dynamischen Matrix der Navigation und eine Schätzung einer Amplitude und einer Kovarianz des Fehlers der gegebenen Art auf einem Schätzungs-Gleitfenster, welches einer gegebenen Anzahl von Inkrementierungen des Kalman-Filters entspricht, der die Hybrid-Navigations-Lösung erarbeitet, umfasst, wobei die dynamische Navigations-Matrix eine Verbindung zwischen der Fehleramplitude und der Diskrepanz, die durch den Fehler auf die Hybrid-Navigations-Lösung induziert wird, darstellt.

10. Verfahren gemäß einem der vorherigen Ansprüche, wobei die beiden Wahrscheinlichkeitsverhältnisse (Ir, Ir') für jeden Satelliten bestimmt werden, wobei ein Verhältnis (Ir) mit der Annahme eines systematischen Fehlers (Bias) verbunden ist, und das andere Verhältnis (Ir') mit der Annahme eines Steigungsfehlers verbunden ist.

11. Verfahren gemäß den Ansprüchen 8 und 9, wobei, wenn ein systematischer Fehler (Bias) im Verlauf des Anzeigeschritts angezeigt wird, der Schritt der Einschätzung der Auswirkung des Fehlers auf jede Hybrid-Navigations-Lösung auf einem Schätzungs-Gleitfenster ausgehend von dem Zeitpunkt der Anzeige des systematischen Fehlers (Bias) bewirkt wird.

12. Verfahren gemäß den Ansprüchen 8 und 9, wobei, wenn ein Steigungsfehler angezeigt wird, der Schritt der Einschätzung der Auswirkung des Fehlers auf jede Hybrid-Navigations-Lösung auf dem Schätzungs-Gleitfenster vor dem Zeitpunkt der Anzeige des Steigungsfehlers bewirkt wird.

13. Verfahren gemäß einem der vorherigen Ansprüche, wobei, wenn mehrere Beträge von Wahrscheinlichkeitsverhältnissen (Ir, Ir') über ihren entsprechenden Schwellenwerten liegen, ein einziger Fehler im Verlauf des Anzeigeschritts angezeigt wird, wobei dieser Fehler dem größten Betrag der Wahrscheinlichkeitsverhältnisse entspricht.

14. Hybridisierungsvorrichtung, umfassend eine virtuelle Plattform (2), welche geeignet ist, Trägheitsmessungen zu berechnen, eine Bank (3) aus Kalman-Filtern, die jeweils dazu bestimmt sind, eine Hybrid-Navigations-Lösung ausgehend von Trägheitsmessungen und von Rohmessungen von Signalen, die von einer Konstellation von Satelliten ausgesendet werden, die von einem Satelliten-Positionierungssystem (GNSS) bereitgestellt werden, zu bearbeiten, umfassend:

- ein Erfassungsmodul (41) welches konfiguriert ist, um, für jeden Satelliten, wenigstens ein Wahrscheinlichkeitsverhältnis (Ir, Ir') zwischen einer Annahme eines Fehlers einer gegebenen Art und einer Annahme der Abwesenheit eines Fehlers des Satelliten zu bestimmen und einen Fehler der gegebenen Art in Abhängigkeit von dem Wahrscheinlichkeitsverhältnis (Ir, Ir') in Bezug auf den Fehler der gegebenen Art und einem Schwellenwert anzugeben, wobei die Vorrichtung **dadurch gekennzeichnet ist, dass** sie außerdem

- ein Akkomodationsmodul (5) umfasst, das konfiguriert ist, die Auswirkung des angezeigten Fehlers auf jede Hybrid-Navigations-Lösung, die von einem Kalman-Filter erarbeitet wird, einzuschätzen und die Hybrid-Navigations-Lösungen in Abhängigkeit von der Einschätzung der Auswirkung des angezeigten Fehlers zu korrigieren.

**Claims**

1. A process for determination of navigation parameters of a carrier by a hybridisation device comprising a bank (3) of Kalman filters each working out a hybrid navigation solution from inertial measurements calculated by a virtual platform (2) and raw measurements of signals emitted by a constellation of satellites supplied by a satellite-positioning system (GNSS), including the steps of:

   - determination, for each satellite, of at least one (Ir, Ir') probability ratio between a hypothesis of breakdown of given type of the satellite and a hypothesis of absence of breakdown of the satellite,
   - declaration of a breakdown of given type on a satellite as a function of the (1r, Ir') probability ratio associated with this breakdown and a threshold value **characterized in that** it also includes the steps of:

      - estimation of the impact of the breakdown declared on each hybrid navigation solution, and
      - correction of the hybrid navigation solutions as a function of the estimation of the impact of the breakdown declared.

2. The process as claimed in the preceding claim, in which, for each satellite, at least one (1r, Ir') probability ratio is determined at each incrementation of the Kalman filter on a sliding storage window, a breakdown of given type being declared if the sum of the (1r, Ir') probability ratios associated with this breakdown on the sliding storage window is greater than the associated threshold value.

3. The process as claimed in the preceding claim, also comprising, if a breakdown is declared, a step of exclusion of raw measurements of signals emitted by the satellite declared in breakdown.

4. The process as claimed in the preceding claim, also comprising a step breakdown confirmation test comprising conducting a statistical test on innovations over a determined period following a declaration of breakdown, each innovation reflecting the spread between an observation corresponding to a raw measurement originating from a satellite not declared in breakdown and an a posteriori estimation of said observation worked out by a Kalman filter using raw measurements originating from all the satellites of the constellation, the declaration of the satellite in breakdown being cancelled if the statistical test is negative.

5. The process as claimed in any one of the preceding claims, also comprising a calculation step, for each satellite, of cross innovation and covariance of cross innovation reflecting the spread between an observation corresponding to a raw measurement originating from the satellite and an a posteriori estimation of said observation worked out by a Kalman filter not using the raw measurement originating from the satellite, the (1r, Ir') probability ratio being determined as a function of cross innovation and of cross covariance innovation provided by said Kalman filter not using the raw measurement originating from the satellite and from estimation of the impact of the breakdown of given type on said cross innovation.

6. The process as claimed in the preceding claim, in which the impact of the breakdown of given type on said cross innovation is estimated by determination, from data provided by said Kalman filter not using the raw measurement originating from the satellite, of a dynamic innovation matrix, and estimation of an amplitude of the breakdown of given type on a sliding estimation window corresponding to a given number (N) of incrementations of said Kalman filter not using the raw measurement originating from the satellite, the dynamic innovation matrix representing a link between the amplitude of the breakdown and the spread caused by the breakdown on cross innovation.

7. The process as claimed in the preceding claim, in which the given number (N) of incrementations of said Kalman filter corresponds to a duration lasting less than a predetermined detection period (T).

8. The process as claimed in Claims 5 and 6, in which estimation of the amplitude of the breakdown of given type is done on the sliding estimation window by a minimisation method by the least-squares method or else by a Kalman filter.

9. The process as claimed in any one of the preceding claims, in which the estimation of the impact of the breakdown on each hybrid navigation solution comprises determination, for each hybrid navigation solution, from data provided by the Kalman filter working out the hybrid navigation solution, of a dynamic navigation matrix, and estimation of an amplitude and covariance of the breakdown of given type on a sliding estimation window corresponding to a given number of incrementations of said Kalman filter working out the hybrid navigation solution, the dynamic navigation matrix representing a link between the amplitude of the breakdown and the spread caused by the breakdown on said hybrid navigation solution.

10. The process as claimed in any one of the preceding claims, in which two (1r, Ir') probability ratios are determined for each satellite, one (Ir) ratio being associated with a hypothesis of breakdown of bias type and the other (Ir') ratio being associated with a hypothesis of breakdown of ramp type.

11. The process as claimed in Claims 8 and 9, in which, if a breakdown of bias type is declared during the declaration step, and the estimation step of the impact of the breakdown on each hybrid navigation solution is done on a sliding estimation window from the moment of declaration of the breakdown of bias type.

12. The process as claimed in Claims 8 and 9, in which, if a breakdown of ramp type is declared, the step of estimation of the impact of the breakdown on each hybrid navigation solution is done on the sliding estimation window preceding the moment of declaration of the breakdown of ramp type.

13. The process as claimed in any one of the preceding claims, in which, if several sums of (1r, Ir') probability ratios are greater than their associated threshold value, a single breakdown is declared during the declaration step, said breakdown corresponding to the greater of the sums of probability ratios.

14. A hybridisation device comprising a virtual platform (2) capable of calculating inertial measurements, a bank of Kalman filter (3) designed to elaborate a hybrid navigation solution from inertial measurements and raw measurements of signals emitted by constellations of satellites delivered by a satellite-positioning system (GNSS), including:

- a detection module (41) configured to determine for each satellite at least one (Ir, Ir') probability ratio between a hypothesis of breakdown of a given type by ratio and a hypothesis of absence of breakdown of the satellite and to declare a breakdown of given type as a function of the (Ir, Ir') probability ratio associated with the breakdown of given type and of a threshold value, the device being **characterized in that** it also includes:
- an accommodation module (5) configured to estimate the impact of the declared breakdown on the hybrid navigation solution elaborated by the Kalman filter, and to correct the hybrid navigation solution as a function of the estimation of the impact of the declared breakdown.

Fig.1

Fig.2b

Fig.2a

**EP 2 459 965 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7219013 B
- FR 0858726
- EP 1914561 A
- WO 2008040658 A
- EP 1801539 A
- FR 0858721

**Littérature non-brevet citée dans la description**

- **CALLC et al.** Performance of Honeywell's Inertial/GPS Hybrid (HiGH) for RNP Operations. *Location and Navigation Symposium, Coronado,* 25 Avril 2006